# EUROPEAN PATENT APPLICATION

(11) **EP 3 079 243 A1**
(43) Date of publication of application: **12.10.2016**
(21) Application number: 16158512.0
(22) Date of filing: 03.03.2016
(51) Int. Cl.: H02K 21/38, H02K 17/42, H02K 19/20

(54) **ELECTRIC GENERATOR**

(30) Priority: 08.04.2015 JP 2015078873
(71) Applicant: Panasonic Intellectual Property Management Co., Ltd., Osaka 540-6207 (JP)
(72) Inventor: SAKIYAMA, Kazuyuki, Osaka, 540-6207 (JP); TAKAHASHI, Eiji, Osaka, 540-6207 (JP)
(74) Representative: Eisenführ Speiser

(57) **Abstract**

An electric generator includes a magnetic flux generating unit that generates a magnetic flux, a rotation unit that rotates about a rotation axis, and an induction coil unit including a winding. The magnetic flux generating unit, the rotation unit, and the induction coil unit are arranged along the rotation axis. The rotation unit is disposed between the magnetic flux generating unit and the induction coil unit. The rotation unit includes a magnetic flux changing part. The magnetic flux changing part passes across a space through which the magnetic flux linked to the winding passes, by a rotation of the rotation unit. A density of the magnetic flux linked to the winding is changed by the magnetic flux changing part passing across the space. An electromotive force is induced in the induction coil unit in accordance with the change in the density of the magnetic flux linked to the winding.

## Description

### BACKGROUND

### 1. Technical Field

The present disclosure relates to an electric generator.

### 2. Description of the Related Art

Japanese Unexamined Patent Application Publication No. 2003-180059 discloses a rotary machine including an armature core on which an armature winding and a field winding are wound and a rotor including an inductor having a magnetic salient pole.

### SUMMARY

Stable generation of high output power is required in related art rotary machines.

In one general aspect, the techniques disclosed here feature an electric generator including: a magnetic flux generating unit that generates a magnetic flux; a rotation unit that rotates about a rotation axis; and an induction coil unit including a winding, wherein the magnetic flux generating unit, the rotation unit, and the induction coil unit are arranged along the rotation axis, the rotation unit is disposed between the magnetic flux generating unit and the induction coil unit, the rotation unit includes a magnetic flux changing part, the magnetic flux changing part passes across a space through which the magnetic flux linked to the winding passes, by a rotation of the rotation unit, a magnetic flux density of the magnetic flux linked to the winding is changed by the magnetic flux changing part passing across the space through which the magnetic flux linked to the winding passes, and an electromotive force is induced in the induction coil unit in accordance with the change in the magnetic flux density of the magnetic flux linked to the winding.

The electric generator according to the present disclosure achieves stable generation of high output power.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a view illustrating a schematic configuration of an electric generator of a first embodiment;
Fig. 2 is a view indicating a simulation model of the first embodiment;
Fig. 3 is a view indicating an example of a magnetic flux distribution;
Fig. 4 is a diagram indicating a magnetic flux density distribution;
Fig. 5 is a view illustrating a schematic configuration of an electric generator of a second embodiment;
Fig. 6 is a view illustrating a schematic configuration of an electric generator of a third embodiment;
Fig. 7 is an exploded view illustrating a schematic configuration of an electric generator of a fourth embodiment;
Fig. 8 is a view illustrating a schematic configuration of the electric generator of the fourth embodiment in an assembled state;
Fig. 9A is a top view and Fig. 9B and Fig. 9C are cross-sectional views illustrating schematic configurations of the electric generator of the fourth embodiment;
Fig. 10 is a view illustrating a portion of the cross section of the electric generator of the fourth embodiment; and
Fig. 11 is a view illustrating a modification of the electric generator of the fourth embodiment.

### DETAILED DESCRIPTION

Hereinafter, an embodiment is described with reference to the drawings.

The inventor of the present invention focused on the points described below.

A rotary electric generator generates more output power as the rotational speed of the rotor increases. However, high-speed rotation causes wear of a rotation bearing or a brush, leading to a malfunction in the rotary electric generator, and the high-speed rotation also generates vibration noise.

Instead of the above, high output power may be achieved by increasing an operative magnetic flux density.

In a rotary machine that uses a permanent magnet, the operative magnetic flux density is increased by using a magnet having a high magnetic force. However, the magnet having a high magnetic force (a magnet including a rare-earth magnetic material, for example) is typically expensive.

In the rotary machine including the field winding as disclosed in Japanese Unexamined Patent Application Publication No. 2003-180059, a magnetomotive force may be increased by increasing the number of windings of the armature coil. Alternatively, in the rotary machine including the field winding, an electrical current flowing through the coil may be increased by using a thick magnet coil, for example, to increase the magnetomotive force. The increased magnetomotive force increases the operative magnetic flux density. However, such methods lead to an increase in the size and the weight of the armature.

The inventor of the present invention achieved the configuration described in the following embodiments in view of the above problems.

### First Embodiment

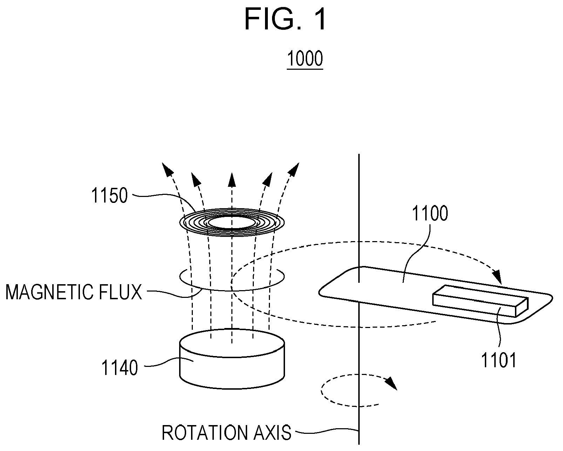

Fig. 1 is a view illustrating a schematic configuration of an electric generator 1000 of a first embodiment.

The electric generator 1000 of the first embodiment includes a magnetic flux generating unit 1140, a rotation unit 1100, and an induction coil unit 1150.

The magnetic flux generating unit 1140 generates a magnetic flux.

The rotation unit 1100 rotates about a rotation axis.

The induction coil unit 1150 includes a winding.

The magnetic flux generating unit 1140, the rotation unit 1100, and the induction coil unit 1150 are arranged along the rotation axis.

The rotation unit 1100 is disposed between the magnetic flux generating unit 1140 and the induction coil unit 1150.

The rotation unit 1100 includes a magnetic flux changing part 1101.

The magnetic flux changing part 1101 passes across a space through which the magnetic flux linked to the winding passes, by a rotation of the rotation unit 1100.

A magnetic flux density of the magnetic flux linked to the winding is changed by the magnetic flux changing part 1101 passing across the space through which the magnetic flux linked to the winding passes.

An electromotive force is induced in the induction coil unit 1150 in accordance with the change in the magnetic flux density of the magnetic flux linked to the winding.

With the above-described configuration, stable generation of high output power is achieved even when a component having a small magnetomotive force is used.

In other words, with the above-described configuration, the magnetic flux changing part 1101 enables the induction coil unit 1150 to be exposed to the magnetic flux that has a higher magnetic flux density than the magnetic flux newly generated by the magnetic flux generating unit 1140. Thus, a component having a small magnetomotive force (weakly magnetized magnet, for example) is able to be used as the magnetic flux generating unit 1140. This allows a reduction in size of the magnetic flux generating unit 1140, leading to a reduction in the overall size of the electric generator 1000. In addition, expensive materials such as a rare-earth magnetic material are not necessary to increase the magnetomotive force.

In addition, with the above-described configuration, a large and heavy component such as the induction coil unit 1150 or a magnetic flux generating unit 1140 does not need to be rotated to generate power. In other words, power is generated by rotating the rotation unit 1100 (the magnetic flux changing part 1101) having a relatively simple configuration and a relatively light weight. Thus, trouble and mechanical loss during the rotation, particularly during the high-speed rotation, are reduced.

In addition, with the above-described configuration, the electric generator 1000 does not need to include a brush. This prevents the electric generator 1000 from having a malfunction caused by wear of the brush.

In the electric generator 1000 of the first embodiment, the rotation unit 1100 may be a conductive plate.

With the above-described configuration, an eddy current is induced in the conductive plate. This enables the magnetic flux generated by the magnetic flux generating unit 1140 to concentrate on a position in front of the conductive plate in the moving direction of the conductive plate. Thus, the magnetic flux having a higher magnetic flux density than the magnetic flux newly generated by the magnetic flux generating unit 1140 is efficiently obtained.

In the electric generator 1000 of the first embodiment, the magnetic flux changing part 1101 may be an opening in the conductive plate.

In such a state, the magnetic flux changing part 1101 includes an empty space as the opening. This further reduces the weight of the rotation unit 1100.

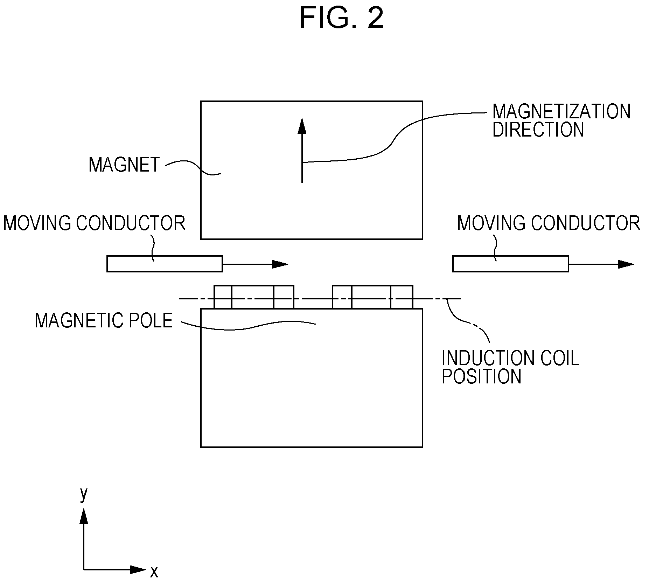

Fig. 2 is a view indicating a simulation model in the first embodiment.

The simulation model in Fig. 2 is a model using two-dimensional magnetic field analysis. The speed of a moving conductor and the dimensions of a magnet and a magnetic pole, which are used as parameters, are varied to perform a simulation.

In the simulation model indicated in Fig. 2, a static magnetic field is formed by the magnetic pole provided by a yoke and the magnet.

Changes in the magnetic flux density at an induction coil position, which are caused by the moving conductor rotating so as to pass across the static magnetic field, are analyzed by using the simulation model illustrated in Fig. 2.

The moving conductor is made of aluminum. The magnet has a magnetic flux density of 1.2 T. The magnetic pole is provided by the yoke made of silicon steel.

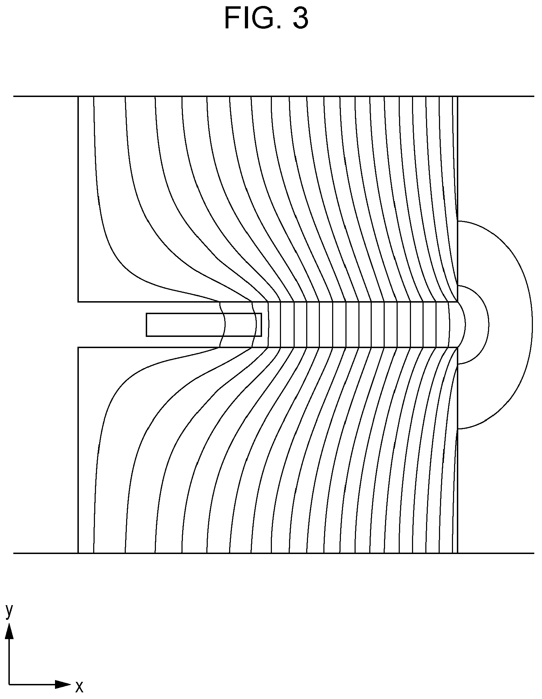

Fig. 3 is a view illustrating an example of a magnetic flux distribution at one moment during the passage of the moving conductor across the static magnetic field.

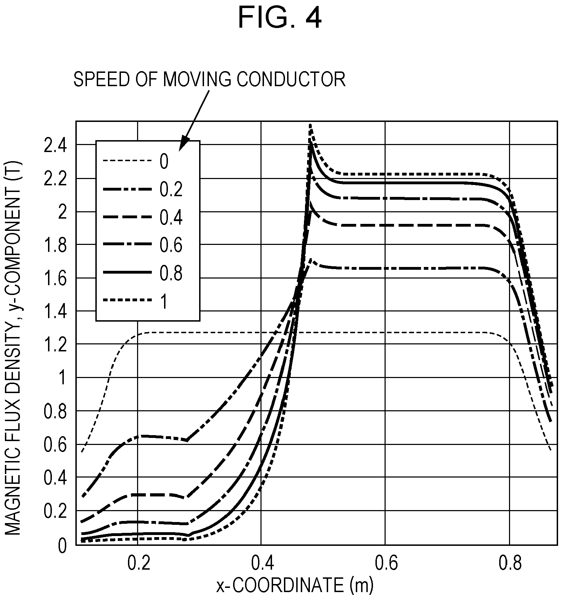

Fig. 4 is a diagram indicating the magnetic flux density distributions at the one moment in Fig. 3.

The magnetic flux density distributions in Fig. 4 are obtained by varying the speed of the moving conductor as a parameter.

Fig. 4 indicates comparative magnetic flux density distributions at the induction coil position. The moving speeds of the moving conductor are normalized by the maximum speed so as to be in the range from 1 to 0. Specifically, the moving speeds are normalized by a rotational speed of 100 rpm. The dimensional parameters of the moving conductor, for example, are constant.

As can be understood from the simulation result, an induced electromagnetic force corresponding to the moving speed is generated in the moving conductor passing across the static magnetic field. The induced electromagnetic force causes an eddy current to flow in the moving conductor. The eddy current flows in such a direction as to block the magnetic flux passing through the moving conductor. Thus, as illustrated in Fig. 3, the magnetic flux becomes concentrated at the position in front of the moving conductor.

Since the moving conductor moves in the static magnetic field, the magnetic flux density varies depending on the speed and the position of the moving conductor. Thus, an induced electromagnetic voltage is generated in the induction coil in accordance with an amount of change in the magnetic flux density.

With the above-described configuration, the induction coil is exposed to the magnetic flux having a higher magnetic flux density than the magnetic flux newly generated by the magnet.

In the electric generator 1000 of the first embodiment, a magnetic substance may be disposed in the opening.

With this configuration, not only is the magnetic flux density changed by the magnetic flux changing part 1101, but also the magnetic flux density is increased by the magnetic substance. Thus, the induced electromagnetic voltage at the induction coil unit 1150 is more efficiently increased.

In the electric generator 1000 of the first embodiment, the rotation unit 1100 may be an insulating plate. In such a case, the magnetic flux changing part 1101 may be a magnetic substance on the insulating plate.

In the above-described configuration, the insulator prevents an eddy current from being induced. This reduces a loss of the electric field.

With the above-described configuration, the magnetic substance on the insulating plate changes the amount of the magnetic flux linked to the winding of the induction coil unit 1150. Thus, the induced electromagnetic voltage is generated in the induction coil.

The electric generator 1000 of the first embodiment may include a yoke (magnetic yoke, for example). The yoke may form a loop magnetic path through which the magnetic flux linked to the winding flows back to the magnetic flux generating unit 1140.

With this configuration, the magnetic flux generated by the magnetic flux generating unit 1140 returns to the magnetic flux generating unit 1140 through the yoke. This increases the strength of the magnetic flux flowing to the induction coil unit 1150.

In the example illustrated in Fig. 1, the rotation unit 1100 includes a retainer that holds the magnetic flux changing part 1101. However, the rotation unit 1100 may have any shape other than the shape illustrated in Fig. 1. The rotation unit 1100 may be a circular plate or may have a rectangular shape.

In the first embodiment, the magnetic flux generating unit 1140 may be a magnet.

Alternatively, the magnetic flux generating unit 1140 may be made of an electromagnet including a coil and a magnetic core. In such a case, in the electric generator 1000 of the first embodiment, a magnetomotive force of the electromagnet for generating the operative magnetic field may be small. This enables reduction in the current flowing through the coil, leading to reduction in the weight of the coil and copper loss.

### Second Embodiment

Hereinafter, a second embodiment is described. Configurations in the second embodiment identical to those in the first embodiment are not described, as appropriate.

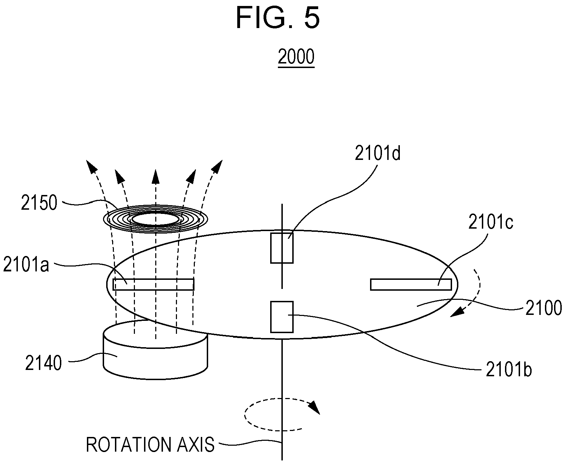

Fig. 5 is a view illustrating a schematic configuration of an electric generator 2000 of the second embodiment.

The electric generator 2000 of the second embodiment includes a magnetic flux generating unit 2140, a rotation unit 2100, and an induction coil unit 2150.

The magnetic flux generating unit 2140 generates a magnetic flux.

The rotation unit 2100 rotates about a rotation axis.

The induction coil unit 2150 includes a winding.

The magnetic flux generating unit 2140, the rotation unit 2100, and the induction coil unit 2150 are arranged along the rotation axis.

The rotation unit 2100 is disposed between the magnetic flux generating unit 2140 and the induction coil unit 2150.

The rotation unit 2100 includes a first magnetic flux changing part 2101 a.

The first magnetic flux changing part 2101 a passes across the space through which the magnetic flux linked to the winding passes, by a rotation of the rotation unit 2100.

A magnetic flux density of the magnetic flux passing through the winding is changed by the first magnetic flux changing part 2101 a passing across the space through which the magnetic flux linked to the winding passes.

An electromotive force is induced in the induction coil unit 2150 in accordance with the change in the magnetic flux density of the magnetic flux linked to the winding.

The above-described configuration has advantages identical to those described in the first embodiment.

The rotation unit 2100 of the electric generator 2000 of the second embodiment further includes a second magnetic flux changing part 2101 b.

The second magnetic flux changing part 2101 b passes across the space through which the magnetic flux linked to the winding passes, by a rotation of the rotation unit 2100.

A magnetic flux density of the magnetic flux passing through the winding is changed by the second magnetic flux changing part 2101 b passing across the space through which the magnetic flux linked to the winding passes.

A second electromotive force is induced in the induction coil unit 2150 in accordance with the change in the magnetic flux density of the magnetic flux linked to the winding.

With the above-described configuration, a plurality of electromotive forces is induced in one induction coil unit 2150. Thus, one rotary motion efficiently generates more outlet power.

In the electric generator 2000 of the second embodiment, the rotation unit 2100 may include three or more magnetic flux changing parts. As illustrated in Fig. 5, the rotation part 2100 may further include a third magnetic flux changing unit 2101 c and a fourth magnetic flux changing part 2101 d, for example.

In the example illustrated in Fig. 5, the rotation unit 2100 is a disc shaped plate. However, the shape of the rotation unit 2100 is not limited to the disc shape. The rotation unit 2100 may have a rectangular shape. Alternatively, the rotation unit 2100 may include a plurality of retainers that hold the plurality of magnetic flux changing parts.

The other additional configurations described in the first embodiment may be suitably applied to the second embodiment.

### Third Embodiment

Hereinafter, a third embodiment is described. Configurations identical to those of the first embodiment or the second embodiment are not described, as appropriate.

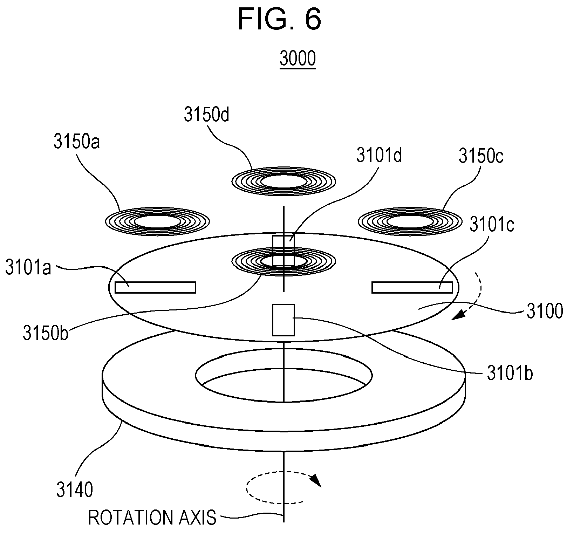

Fig. 6 is a view illustrating a schematic configuration of an electric generator 3000 of the third embodiment.

The electric generator 3000 of the third embodiment includes a magnetic flux generating unit 3140, a rotation unit 3100, and a first induction coil unit 3150a.

The magnetic flux generating unit 3140 generates a magnetic flux.

The rotation unit 3100 rotates about a rotation axis.

The first induction coil unit 3150a includes a first winding.

The magnetic flux generating unit 3140, the rotation unit 3100, and the first induction coil unit 3150a are arranged along the rotation axis.

The rotation unit 3100 is disposed between the magnetic flux generating unit 3140 and the first induction coil unit 3150a.

The rotation unit 3100 includes a first magnetic flux changing part 3101 a.

The first magnetic flux changing part 3101 a passes across a space through which the magnetic flux linked to the first winding passes, by a rotation of the rotation unit 3100.

A magnetic flux density of the magnetic flux passing through the first winding is changed by the first magnetic flux changing part 3101 a passing across the space through which the magnetic flux linked to the first winding passes.

An electromotive force is induced in the first induction coil unit 3150a in accordance with the change in the magnetic flux density of the magnetic flux linked to the first winding.

The above-described configuration has advantages identical to those described in the first embodiment.

The electric generator 3000 of the third embodiment further includes a second induction coil unit 3150b.

The second induction coil unit 3150b includes a second winding.

The magnetic flux generating unit 3140, the rotation unit 3100, and the second induction coil unit 3150b are arranged along the rotation axis.

The rotation unit 3100 is disposed between the magnetic flux generating unit 3140 and the second induction coil unit 3150b.

The rotation unit 3100 includes a second magnetic flux changing part 3101 a.

The second magnetic flux changing part 3101 a passes across a space through which the magnetic flux linked to the second winding passes, by a rotation of the rotation unit 3100.

A magnetic flux density of the magnetic flux passing through the second winding is changed by the second magnetic flux changing part 3101 a passing across the space through which the magnetic flux linked to the second winding passes.

An electromotive force is induced in the second induction coil unit 3150b in accordance with the change in the magnetic flux density of the magnetic flux linked to the second winding.

With the above-described configuration, an electromotive force is induced in a plurality of induction coil units. Thus, one rotary motion efficiently generates outlet power a plurality of times.

The electric generator 3000 of the third embodiment may include three or more induction coil units. As illustrated in Fig. 6, the electric generator 3000 may further include a third induction coil unit 3150c including a third winding and a fourth induction coil unit 3150d including a fourth winding.

In the electric generator 3000 of the third embodiment, the rotation unit 3100 may include only one magnetic flux changing part.

Alternatively, in the electric generator 3000 of the third embodiment, the rotation unit 3100 may include two or more magnetic flux changing parts. As illustrated in Fig. 6, the rotation unit 3100 may further include a second magnetic flux changing part 3101 b, a third magnetic flux changing part 3101 c and/or a fourth magnetic flux changing part 3101 d in addition to the first magnetic flux changing part 3101 a.

The above-described configuration has advantages identical to those described in the second embodiment.

In the example illustrated in Fig. 6, the magnetic flux generating unit 3140 is composed of one magnetic flux generating component. However, the configuration of the magnetic flux generating unit 3140 is not limited to such a configuration. The magnetic flux generating unit 3140 may be composed of a plurality of magnetic flux generating components. In such a case, the magnetic flux generating components may be positioned so as to face the corresponding induction coil units. The magnetic flux generating components may generate magnetic fluxes having the same intensity or may generate magnetic fluxes having different intensities.

The other additional configurations described in the first embodiment or the second embodiment may be suitably applied to the third embodiment.

### Fourth Embodiment

Hereinafter, a fourth embodiment is described. Components identical to those in the first, second, or third embodiment are not described, as appropriate.

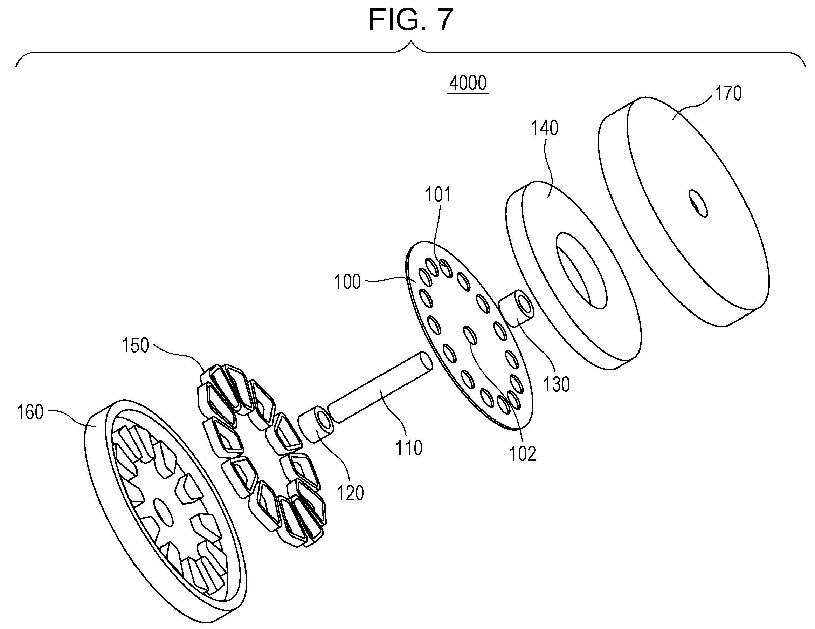

Fig. 7 is an exploded view illustrating a schematic configuration of an electric generator 4000 of a fourth embodiment.

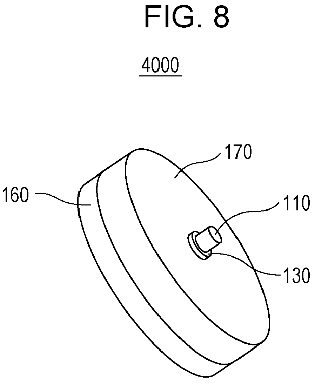

Fig. 8 is a view illustrating a schematic configuration of the electric generator 4000 of the fourth embodiment in an assembled state.

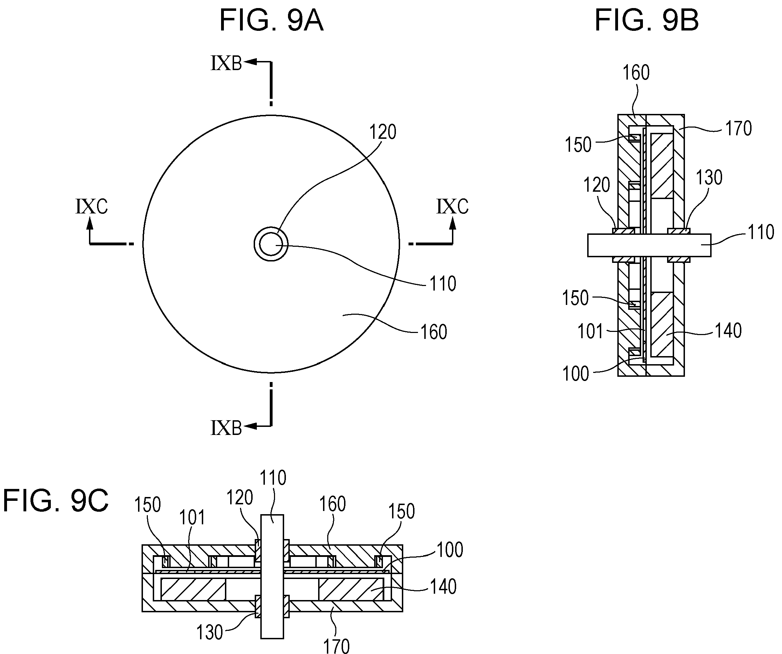

Fig. 9A is a top view and Figs. 9B and 9C are cross-sectional views illustrating a schematic configuration of the electric generator 4000 of the fourth embodiment.

The electric generator 4000 of the fourth embodiment includes a magnetic flux generating unit 140, a rotation unit 100, and an induction coil unit 150.

The magnetic flux generating unit 140 generates a magnetic flux.

The rotation unit 100 rotates about a rotation axis.

The induction coil unit 150 includes a winding.

The magnetic flux generating unit 140, the rotation unit 100, and the induction coil unit 150 are arranged along the rotation axis.

The rotation unit 100 is disposed between the magnetic flux generating unit 140 and the induction coil unit 150.

The rotation unit 100 includes magnetic flux changing parts 101.

The magnetic flux changing parts 101 pass across the space through which the magnetic flux linked to the winding passes, by a rotation of the rotation unit 100.

A magnetic flux density of the magnetic flux passing through the winding is changed by the magnetic flux changing part 101 passing across the space through which the magnetic flux linked to the winding passes.

An electromotive force is induced in the induction coil unit 150 in accordance with the change in the magnetic flux density of the magnetic flux linked to the winding.

The above-described configuration has advantages identical to those described in the first embodiment.

In the electric generator 4000 of the fourth embodiment, the rotation unit 100 includes a plurality of magnetic flux changing parts 101.

The above-described configuration has advantages identical to those described in the second embodiment.

The electric generator 4000 of the fourth embodiment includes a plurality of induction coil units 150.

The above-described configuration has advantages identical to those described in the third embodiment.

In the electric generator 4000 of the fourth embodiment, the magnetic flux generating unit 140 is a magnet. The magnet is magnetized in the direction of the rotation axis. The magnet applies an axial magnetic field to the rotation unit 100.

In the electric generator 4000 of the fourth embodiment, the rotation unit 100 is a conductive plate.

In the electric generator 4000 of the fourth embodiment, the magnetic flux changing parts 101 are openings in the conductive plate.

The electric generator 4000 of the fourth embodiment further includes a rotation shaft 110, bearings 120 and 130, and magnetic yokes 160 and 170.

In the electric generator 4000 of the fourth embodiment, the rotation unit 100 further includes a rotation shaft connecting unit 102.

The rotation shaft 110 may be rotated in conjunction with rotational motion of an engine, an axle, or a fan, for example.

The bearings 120 and 130 support the rotation shaft 110.

The rotation shaft connecting unit 102 transmits rotational motion of the rotation shaft 110 to the rotation unit 100.

The rotation shaft connecting unit 102 may allow direct connection between the rotation shaft 110 and the rotation unit 100 such that the rotation unit 100 rotates at the same rotation frequency as that of the rotation shaft 110. Alternatively, the rotation shaft connecting unit 102 may include a gear, for example. The rotational speed of the rotation unit 100 may be varied by the gear to change an induced electromotive voltage.

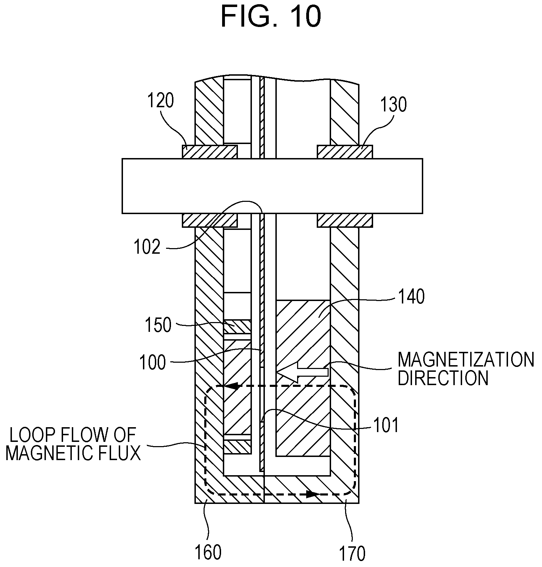

Fig. 10 is a view illustrating a portion of a cross section of the electric generator 4000 of the fourth embodiment.

The magnetic yoke 160 and the magnetic yoke 170 form a loop magnetic path through which the magnetic flux linked to the winding flows back to the magnetic flux generating unit 140.

As illustrated in Fig. 10, when the rotation unit 100 stops, the magnetic flux generated by the magnetic flux generating unit 140, which is magnetized in the direction of the rotation shaft 110, passes through the rotation unit 100. Then, the magnetic flux links with the induction coil unit 150. Then, the magnetic flux flows back to the magnetic flux generating unit 140 through the magnetic yokes 160 and 170.

The magnetic yoke 160 and the magnetic yoke 170 are disposed such that the magnetic flux generating unit 140, the rotation unit 100, and the induction coil unit 150 are situated therebetween.

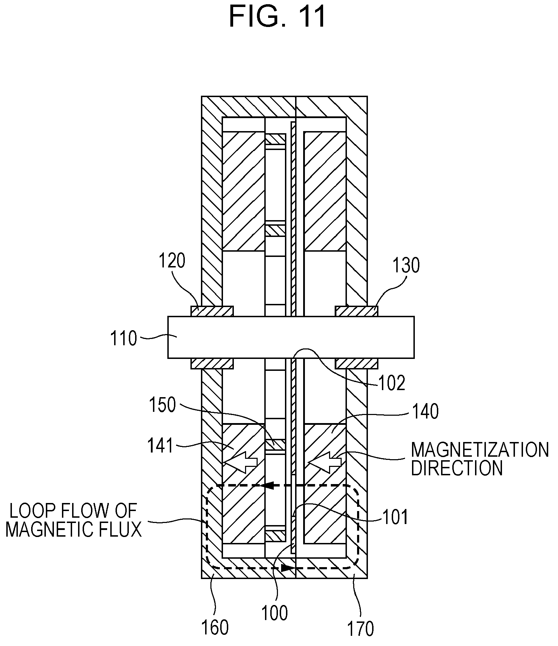

Fig. 11 is a view illustrating a modification of the electric generator 4000 of the fourth embodiment.

As illustrated in Fig. 11, the electric generator 4000 of the fourth embodiment may further include a second magnetic flux generating unit 141.

The second magnetic flux generating unit 141 is disposed on an opposite side of the induction coil 150 from the magnetic flux generating unit 140.

With this configuration, the intensity of the static magnetic field in an operative space, in which the induction coil 150 is disposed, increases. This enables an amount of change in the magnetic flux density caused by the magnetic flux changing part 101 to be controlled to a predetermined degree.

The configurations described in the first to fourth embodiments may be suitably combined.

The electric generator in this disclosure may be used in an electric generator for a vehicle or an electric generator for a recharger, for example.

While the present disclosure has been described with respect to exemplary embodiments thereof, it will be apparent to those skilled in the art that the disclosure may be modified in numerous ways and may assume many embodiments other than those specifically described above. Accordingly, it is intended by the appended claims to cover all modifications of the disclosure that fall within the true spirit and scope of the disclosure.

## Claims

1. An electric generator comprising:
a magnetic flux generating unit that generates a magnetic flux;
a rotation unit that rotates about a rotation axis; and
an induction coil unit including a winding, wherein
the magnetic flux generating unit, the rotation unit, and the induction coil unit are arranged along the rotation axis,
the rotation unit is disposed between the magnetic flux generating unit and the induction coil unit,
the rotation unit includes a magnetic flux changing part,
the magnetic flux changing part passes across a space through which the magnetic flux linked to the winding passes, by a rotation of the rotation unit,
a magnetic flux density of the magnetic flux linked to the winding is changed by the magnetic flux changing part passing across the space through which the magnetic flux linked to the winding passes, and
an electromotive force is induced in the induction coil unit in accordance with the change in the magnetic flux density of the magnetic flux linked to the winding.

2. The electric generator according to Claim 1, wherein
the rotation unit includes a second magnetic flux changing part,
the second magnetic flux changing part passes across the space through which the magnetic flux linked to the winding passes, by the rotation of the rotation unit,
a magnetic flux density of the magnetic flux linked to the winding is changed by the second magnetic flux changing part passing across the space through which the magnetic flux linked to the winding passes, and
a second electromotive force is induced in the induction coil unit in accordance with the change in the magnetic flux density of the magnetic flux linked to the winding.

3. The electric generator according to Claim 1, further comprising a second induction coil unit including a second winding, wherein
the magnetic flux generating unit, the rotation unit, and the second induction coil unit are arranged along the rotation axis,
the rotation unit is disposed between the magnetic flux generating unit and the second induction coil unit,
the magnetic flux changing part passes across a space through which the magnetic flux linked to the second winding passes, by the rotation of the rotation unit,
a magnetic flux density of the magnetic flux linked to the second winding is changed by the magnetic flux changing part passing across the space through which the magnetic flux linked to the second winding passes, and
an electromotive force is induced in the second induction coil unit in accordance with the change in the magnetic flux density of the magnetic flux linked to the second winding.

4. The electric generator according to Claim 1, wherein
the rotation unit is a conductive plate, and
the magnetic flux changing part is an opening in the conductive plate.

5. The electric generator according to Claim 4, wherein a magnetic substance is disposed in the opening.

6. The electric generator according to Claim 1, wherein
the rotation unit is an insulating plate, and
the magnetic flux changing part is a magnetic substance on the insulating plate.

7. The electric generator according to Claim 1, further comprising a yoke that provides a loop magnetic path through which the magnetic flux linked to the winding flows back to the magnetic flux generating unit.

8. The electric generator according to Claim 1, further comprising a second magnetic flux generating unit, wherein
the second magnetic flux generating unit is disposed on an opposite side of the induction coil unit from the magnetic flux generating unit.
